# EUROPEAN PATENT SPECIFICATION

(11) **EP 2 490 324 B1**
(45) Date of publication and mention of the grant of the patent: **07.11.2018**
(21) Application number: 10823538.3
(22) Date of filing: 07.09.2010
(51) Int. Cl.: H02K 24/00, H02K 11/00, G01D 5/245

(54) **RESOLVER FOR A DRIVING MOTOR OF A VEHICLE**
DREHMELDER FÜR DEN MOTOR EINES FAHRZEUGES
RÉSOLVEUR DESTINÉ À UN MOTEUR D'ENTRAÎNEMENT D'UN VÉHICULE

(30) Priority: 14.10.2009 KR 20090097899; 14.10.2009 KR 20090097897; 14.10.2009 KR 20090097896
(43) Date of publication of application: 22.08.2012
(73) Proprietor: LS Automotive Technologies Co., Ltd., Gyeonggi-do 14118 (KR)
(72) Inventor: SHIN, In-Sub, Daejeon 302-791 (KR); EOM, Hong-Chan, Incheon 405-717 (KR); HUH, Hyun-Ho, Seoul 138-905 (KR); LEE, Bum-Yul, Bucheon-si Gyeonggi-do 420-726 (KR); KIM, Yeong-Sik, Bucheon-si Gyeonggi-do 420-731 (KR); CHOI, Gyu-Ryong, Ansan-si Gyeonggi-do 425-901 (KR); HAN, Man-Heung, Hwaseong-si Gyeonggi-do 445-080 (KR); PARK, Kwang-Hyeon, Siheung-si Gyeonggi-do 429-450 (KR); HONG, Eun-Cheol, Ansan-si Gyeonggi-do 425-120 (KR); CHOI, Seung-Pil, Bucheon-si Gyeonggi-do 420-030 (KR); JANG, Hak-Su, Ansan-si Gyeonggi-do 425-807 (KR); PARK, Geon-Ho, Anyang-si Gyeonggi-do 431-080 (KR)
(74) Representative: Ter Meer Steinmeister & Partner
(86) International application number: PCT/KR2010/006060
(87) International publication number: WO 2011/046296

(56) References cited:
- EP-A1- 1 422 808
- JP-A- S5 574 109
- JP-A- 55 074 109
- JP-A- 2001 136 703
- JP-A- 2003 125 551
- JP-A- 2003 307 437
- JP-A- 2004 135 430
- JP-A- 2006 109 658
- JP-A- 2008 002 808

## Description

### [Technical Field]

The present invention relates to a resolver of an electric driving motor for vehicle, and more particularly to a terminal structure of the resolver of an electric driving motor for vehicle.

### [Background Art]

An electric or hybrid vehicle has become the center of public attention to solve problems such as exhaustion of fossil fuel, environmental pollution. The electric or hybrid vehicle comprises an electric motor to provide a driving force.

In controlling the electric motor, a resolver is used for sensing a rotational angular velocity and rotational angle of a rotor to interpret an absolute position of the rotor.

Generally, the resolver comprises a stator, a rotor and a rotating trans. Coils of the stator and the rotor are wound so that a magnetic flux can have a sinusoidal wave according to its angle.

If a rotating shaft is rotated in a state that an excitation voltage is applied to a primary coil (input), a magnetic coupling coefficient is changed so that a voltage is generated to a secondary coil (output) with a varying amplitude of a carrier. The coils are wound so that the voltage can be changed with a sine or cosine wave according to a rotation angle of the rotating shaft.

The rotation angle of the resolver can be found by interpreting a difference in the carrier amplitudes of the sine and cosine outputs.

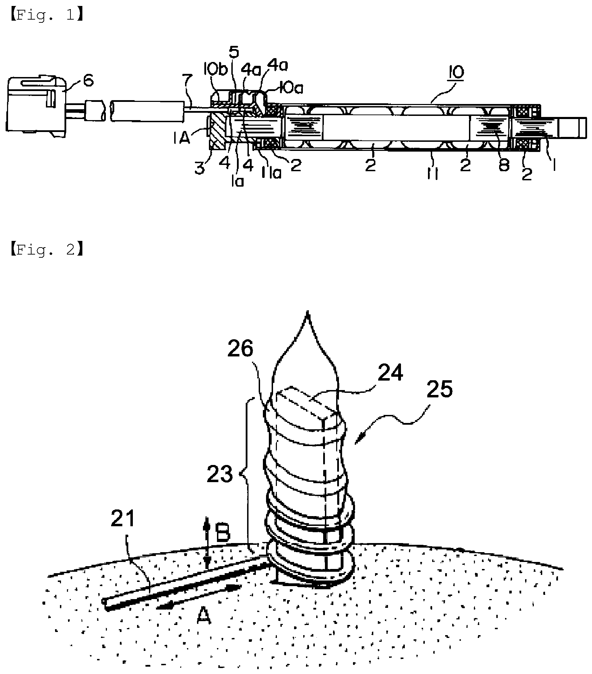

Fig. 1 is a side view of a conventional resolver of an electric driving motor for vehicle. This type of conventional resolver is published in Japanese Patent Registration No. 3428395.

The conventional resolver of an electric driving motor comprises a rotor 8, a stator 2 where coil 2 is wound and a coil protecting cover 10 which protects the coil 2.

Also, as a means for connecting the coil 2 with a lead line 7 which is connected to an outer device, the conventional resolver comprises a terminal pin 4 which is electrically connected to the lead line 7, a protrusion 4a which extends from the terminal pin 4 in an axial direction to wind and electrically connect with the coil 2, and an undercover 3 and a plastic member 5 which support the terminal pin 4 and the protrusion 4a.

The terminal pin 4 and the lead line 7 perform a connecting function of electrically connecting the stator 2 with the outer device. The protrusion 4a performs a terminal function of contacting and electrically connecting with the coil 2.

According to the conventional resolver of an electric driving motor, the protrusion 4a and the terminal pin 4 are supported together by the undercover 3e and the plastic member 5, where the undercover 3e and the plastic member 5 are formed integrally therebetween.

Therefore, even if a problem is generated only in the protrusion 4a such as the coil 2 is separated from the protrusion 4a or the problem is generated only in the terminal pin 4 such as the lead line 7 is separated from the terminal pin 4, two parts should be removed from the stator 2 and replaced together. Accordingly, manufacturing process or repairing process becomes complicated and the cost is increased.

Also, according to the conventional resolver of an electric driving motor, the protrusion 4a which contacts the coil 2 for electrical connection is covered by a swelling part 10a which extends from a coil protecting cover 10.

Therefore, even if a problem is generated such as the coil 2 is separated from the protrusion 4a, it is difficult to check a state of an inside and cause of a malfunction is not readily found.

Moreover, as the swelling part 10a is integrally formed with the coil protecting cover 10, the whole coil protecting cover 10 should be disassembled to settle the malfunction of the protrusion 4a.

However, as shown in Fig. 2, according to Korean Patent Application Publication No. 2003-0006897, the conventional resolver of an electric driving motor comprises a terminal end 24 which is electrically connected to an outer device (not shown) and has a free end 23 of the coil 21, that is wound at a stator (not shown), to be wound around which, so that the terminal end 24 electrically connects the coil 21 with the outer device.

The free end 23 of the coil 21 should be stably connected to the terminal end 24 so that the coil 21 and the outer device (not shown) are stably connected therebetween.

Especially, even if a vibration is generated due to a high-speed rotation of the rotor (not shown), the free end 23 of the coil 21 should be certainly prevented from slipping apart and separating from the terminal end 24.

According to the conventional resolver of an electric driving motor, the free end 23 of the coil 21 is coupled to the terminal end 24 by solder 26 or welding. However, according to the conventional resolver of an electric driving motor, such an additional coupling process is required, so that the cost is increased and overall manufacturing process becomes complicated.

European patent application EP1422808A1 discloses a stator core which is surrounded by a first insulating member and a second insulating member. Locking protrusions are formed on the outer periphery of the stator core, and the locking protrusions form a keyway. A modular connector includes a key part that fits within the keyway to secure the modular connector to the stator core. Fastening pins are embedded in the modular connector to conduct electricity from a mating connector and a lead line to the resolver. However, the fastening pins are not protected.

Japanese patent application JP2008/002808A discloses a resolver stator structure including a groove, which is formed on a surface of a holding part of the terminal pin, while a part of the L-type terminal pin is exposed inside the groove, and the part is abutted against the die when insert molding the L-type terminal pin. However, the sealant is applied to the terminal module and not to the connector.

Japanese patent application JP2003/125551A discloses a lead wire fixing attachment, which fixes lead wires, incorporated in a lead wire fixing unit provided on a stator core, the lead wires being connected to a stator winding attachment board via through-holes formed on the top end of the lead wire fixing attachment. The lead wires are inserted through the through-holes, the lead wire fixing attachment is incorporated in the lead wire fixing unit, and the lead wire fixing attachment is fixed by the potting agent. However, the sealant is not applied to the exposed terminal end which connects the coil.

### [Disclosure]

### [Technical Problem]

Therefore, it is an object of the present invention to provide a resolver of an electric driving motor for vehicle where a terminal connecting structure of a stator is modularized to simplify manufacturing and repairing processes and to realize cost reduction.

It is an aspect of the present invention to provide a resolver of an electric driving motor for vehicle where malfunction of a terminal end can be easily found and settled with a simple process.

It is an aspect of the present invention to provide a resolver of an electric driving motor for vehicle where a contact between a coil and the terminal end can be stably maintained using a simple structure without additional coupling process.

### [Technical Solution]

In order to accomplish the above object, the present invention provides a resolver of an electric driving motor for vehicle comprising: a rotor; a stator comprising a stator main body which encircles the rotor, teeth which extend from the stator main body, and a coil wound around the teeth; a terminal module comprising a terminal end which contacts the coil for an electric connection and a terminal main body which supports the terminal end; and a connector module comprising a connector main body which is detachably coupled to the terminal main body and a lead line which is connected to an outer device and supported by the connector main body and which contacts the terminal end for an electric connection if the connector main body is coupled to the terminal main body, wherein the connector main body supports the terminal end to be exposed, and the resolver (200) further comprises a sealant applied to the connector main body to cover and protect the exposed terminal end.

According to an aspect of the present invention, the connector comprises a sealant wall which extends from the connector main body and has a filling space therein to surround the exposed terminal end and to be filled by the sealant, and the sealant is filled in the filling space.

According to an aspect of the present invention, the resolver further comprises a coil protecting cover which is coupled to the stator to protect the coil wound around the teeth, the connector is coupled to the coil protecting cover, and the coil protecting cover forms at least one side of the sealant wall when the connector is coupled to the coil protecting cover.

According to an aspect of the present invention, one of the coil protecting cover and the connector comprises a fitting protrusion to align a coupling position when the connector is coupled to the coil protecting cover, and the other one of the coil protecting cover and the connector comprises a fitting recess to fit with the fitting protrusion.

According to an aspect of the present invention, the terminal end extends to be exposed from the connector main body in an axial direction to a predetermined terminal height, the sealant wall extends from the connector main body to be higher than the terminal height, and the sealant is filled in the filling space with a thickness greater than the terminal height.

According to an aspect of the present invention, the sealant is made of a light permeable material.

According to an aspect of the present invention, the sealant is made of silicon.

### [Advantageous Effects]

According to the resolver of an electric driving motor for vehicle of the present invention as described above, a terminal and a connector are modularized to be coupled detachably so that manufacturing and repairing processes can be simplified. Also, it can be effectively handled when a problem is generated from only one of the terminal and the connector.

Also, according to the resolver of an electric driving motor for vehicle of the present invention, sealant is applied to a terminal end to have light permeability so that it covers and protects the terminal end and enables the terminal end to be formed separately from other members. Therefore, the malfunction of the terminal end can be readily found and settled with a simple process.

Also, as the resolver of an electric driving motor for vehicle of the present invention comprises a coil holder which holds the coil to prevent the coil from separating from the terminal end, so that a contact between the coil and the terminal end can be stably maintained using a simple structure without additional coupling process.

### [Description of Drawings]

Fig. 1 is a side view of a conventional resolver of an electric driving motor for vehicle;
Fig. 2 is an expanded perspective view of a part of the conventional resolver of an electric driving motor for vehicle;
Fig. 3 is an exploded perspective view of a resolver of an electric driving motor for vehicle according to an exemplary embodiment of the present invention;
Fig. 4 is a perspective view of the resolver of an electric driving motor for vehicle of Fig. 3;
Fig. 5 is a perspective view showing a process of mounting a terminal module to a stator in the resolver of an electric driving motor for vehicle of Fig. 3;
Fig. 6 is a perspective view showing a process of mounting a connector module to a stator in the resolver of an electric driving motor for vehicle of Fig. 3;
Fig. 7 is a perspective view of the resolver of an electric driving motor for vehicle according to the exemplary embodiment of the present invention before sealant is applied;
Fig. 8 is a perspective view of the resolver of an electric driving motor for vehicle of Fig. 7 after the sealant is applied;
Fig. 9 is a perspective view of the resolver of an electric driving motor for vehicle according to the exemplary embodiment of the present invention;
Fig. 10 is a schematic view of a terminal end in Fig. 9; and
Fig. 11 is a schematic view of a modification of the terminal end of Fig. 10.

### [Best Mode]

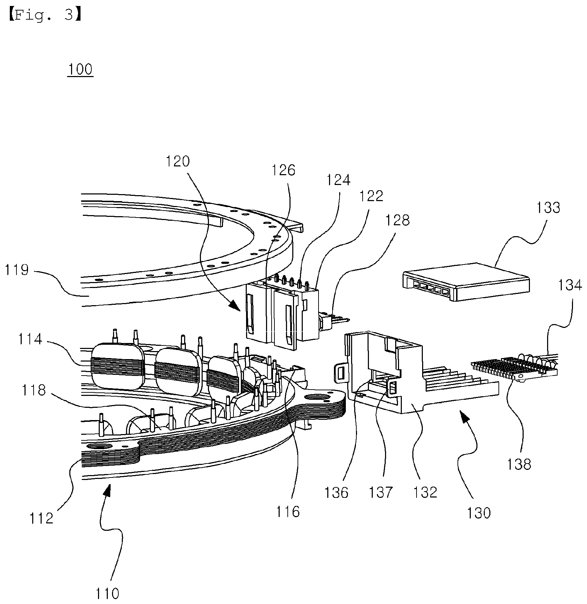

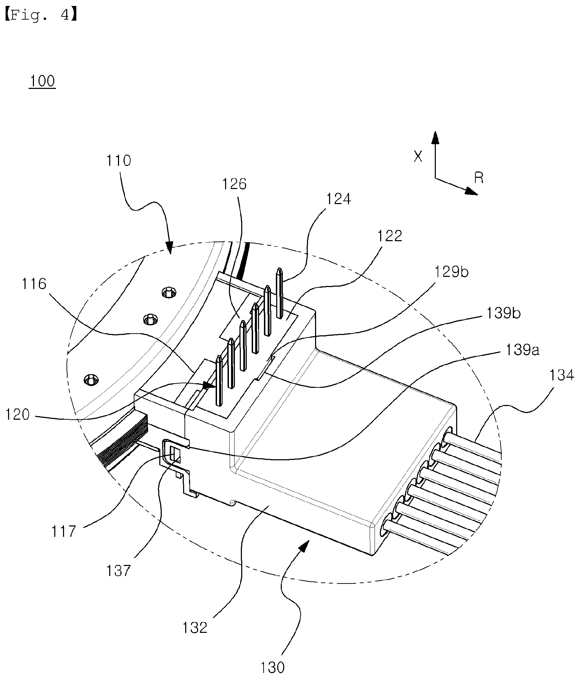

Fig. 3 is an exploded perspective view showing an exploded state of a resolver of an electric driving motor for vehicle according to an exemplary embodiment of the present invention and Fig. 4 is a perspective view of an assembled state of the resolver of an electric driving motor for vehicle of Fig. 3.

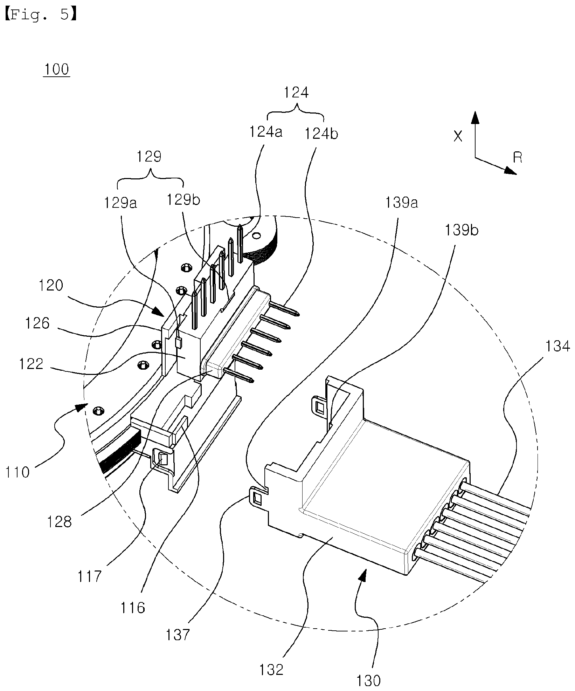

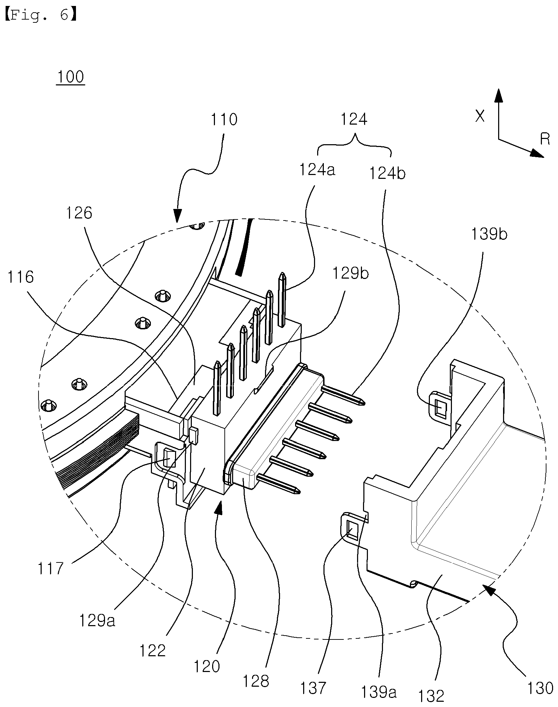

Fig. 5 is a perspective view showing a process of mounting a terminal module to a stator in the resolver of an electric driving motor for vehicle of Fig. 3 and Fig. 6 is a perspective view showing a process of mounting a connector module to a stator in the resolver of an electric driving motor for vehicle of Fig. 3.

As shown in Fig. 3 to Fig. 6, the resolver 100 of an electric driving motor for vehicle comprises a rotor (not shown), a stator 110 having a stator main body 112 which encircles the rotor and teeth 114 which extend from the stator main body 112 to be wound by a coil, a terminal module 120 having a terminal end 124 which contacts the coil for an electric connection and a terminal main body 122 which supports the terminal end 124, and a connector module 130 having a connector main body 132 which is detachably coupled to the terminal main body 122 and a lead line 134 which is connected to an outer device (not shown) and supported by the connector main body 132 and which contacts the terminal end 124 for an electric connection if the connector main body 132 is coupled to the terminal main body 122.

The stator 110 includes the stator main body 112, the teeth 114, an insulating cover 118, a coil protecting cover 119 and a terminal coupling recess part 116. The stator main body 112 has a shape of a ring and encircles the rotor (not shown) to be rotatable. The teeth 114 protrude from the stator main body 112 to extend towards the rotor located therein. A coil (not shown) is wound around the teeth 114 with the insulating cover 118 therebetween. A slot is formed between teeth 114.

The insulating cover 118 is made of an insulating material to insulate the stator main body 112. The insulating cover 118 is attached to both sides of the stator main body 112 in an axial direction X. The insulating cover 118 is formed separately from the stator main body 112 then coupled to the stator main body 112. As another exemplary embodiment, the insulating cover 118 may be formed integrally with the stator main body 112.

The coil protecting cover 119 is coupled to the insulating cover 118 to protect the coil (not shown) which is wound around the teeth 114 with the insulating cover 118 located therebetween.

The terminal coupling recess part 116 is formed at a side of the stator main body 112 to closely receive a terminal coupling protrusion part 126 of the terminal module 120.

The terminal module 120 is provided separately from the connector module 130 to be detachably coupled to the connector module 130. Also, the terminal module 120 is detachably coupled to the stator 110. The terminal module 120 includes a terminal main body 122, a terminal end 124, a coupling part 128 and the terminal coupling protrusion part 126.

The terminal main body 122 supports the terminal end 124. The terminal end 124 is wound by an end of the coil (not shown), which is wound around the teeth 114, to be electrically connected with the coil. The terminal end 124 is provided as a plural number.

The terminal end 124 comprises a terminal pin 124a which extends in the axial direction X to contact the coil (not shown) and a connect pin 124b which extends from the terminal pin 124a in a radial direction R. An end of the terminal pin 124a extends in the axial direction X from the terminal main body 122 to be exposed so that the end of the coil can be wound and connected. Accordingly, the coil (not shown) is electrically connected to the terminal pin 124a and also electrically connected to the lead line 134 of the connector module 130 through the connect pin 124b and a connect end 138 of the connector module 130.

The connect pin 124b is supported by the coupling part 128 to extend from the other end of the terminal pin 124a in the radial direction R. An end of the connect pin 124b extends from the coupling part 128 in the radial direction R to be coupled to the connect end 138 which is exposed through the coupling recess part 136 of the connector module 130.

The coupling part 128 protrudes from the terminal main body 122 in the radial direction R to support the connect pin 124b. When the terminal module 120 is coupled to the connector module 130, the coupling part 128 is received in the coupling recess part 136 of the connector module 130 so that the connect pin 124b is coupled to the connect end 138 to be electrically connected therebetween.

The terminal coupling protrusion part 126 protrudes from the terminal main body 122 so that the stator main body 112 and the terminal main body 122 can be coupled therebetween. The terminal coupling protrusion part 126 and the terminal coupling recess part 116 are formed to face each other to be fit therebetween. As the terminal coupling protrusion part 126 is closely received in the terminal coupling recess part 116, the terminal module 120 is mounted to the stator 110.

The terminal coupling protrusion part 126 and the terminal coupling recess part 116 extend in the axial direction X. Accordingly, the terminal module 120 is guided by a fitting between the terminal coupling protrusion part 126 and the terminal coupling recess part 116, so that it is coupled to the stator 110 in the axial direction X.

Therefore, there is no need of an additional coupling means because the terminal module 120 is easily coupled to and detached from the stator 110. Also, the manufacturing process and the repairing process can be easily accomplished and the cost can be decreased.

Although, according to the exemplary embodiment of the present invention as shown in Fig. 3 to Fig. 6, the terminal coupling protrusion part 126 is provided to the terminal module 120 and the terminal coupling recess part 116 is provided to the stator 110, the terminal coupling protrusion part 126 may be provided to the stator 110 and the terminal coupling recess part 116 may be provided to the terminal module 120.

Also, although the terminal coupling protrusion part 126 and the terminal coupling recess part 116 extend in the axial direction X, they may extend oblique to the axial direction X or extend in the radial direction R or extend oblique to the radial direction R or extend in another direction. Accordingly, the terminal module 120 may be mounted to the stator 110 obliquely to the axial direction X or mounted in the radial direction R or mounted obliquely to the radial direction R or mounted in another direction.

Also, the terminal module 120 and the stator 110 are provided to the terminal main body 122 and the stator main body 112 respectively to be fit therebetween so that they are provided with the terminal guide part (not shown) respectively to guide and fix a coupling position between the terminal coupling protrusion part 126 and the terminal coupling recess part 116.

The connector module 130 includes the connector main body 132, the coupling recess part 136, the connect end 138 and a connect end cover 133. The connector main body 132 is detachably coupled to the terminal main body 122 and supports the connect end 138 and the lead line 134.

The lead line 134 is connected to an outer device (not shown) such as a power supplying unit (not shown) and supported by the connector main body 132. When the connector main body 132 is coupled to the terminal main body 122, the lead line 134 contacts the terminal end 124 for electrical connection.

The coupling recess part 136 is formed at the connector main body 132 to receive the coupling part 128 so that the connect pin 124b can be coupled to the connect end 138. The coupling recess part 136 enables the connect end 138 to be exposed from the connector main body 132 so that the connect pin 124b can be coupled to the connect end 138 to be electrically connected therebetween.

The connect end 138 is supported by the terminal main body 132. One end of the connect end 138 is electrically connected to the lead line 134 and the other end of the connect end 138 is coupled to the connect pin 124b in the radial direction R. The connect end cover 133 covers and protect the connect end 138 which is received in the connecting main body 132.

The terminal module 120 and the connector module 130 are modularized and provided separately from each other to be detachably coupled therebetween. Accordingly, when a problem is generated to only one of the terminal module 120 and the connector module 130, they can be easily separated from each other and only the module having the problem can be replaced. This reduces a waste of replacing the other module having no problem integrally with the one having the problem. The cost can also be saved.

In the resolver 100 of an electric driving motor for vehicle according to the exemplary embodiment of the present invention, the terminal module 120 comprises a guide protrusion 129 which guides a coupling between the terminal main body 122 and the connector main body 132 and the connector module 130 comprises a guide recess 139 which receives the guide protrusion 129.

The guide protrusion 129 is engaged with the guide recess 139 when the connector module 130 is coupled to the terminal module 120 to align the coupling position between the terminal main body 122 and the connector main body 132 and make their coupling state stable.

The guide protrusion 129 has a first guide protrusion 129a which protrudes from a first side of the terminal main body 122 to align the coupling position between the terminal main body 122 and the connector main body 132 in a vertical direction, and a second guide protrusion 129b which protrudes from a second side of the terminal main body 122 to align the coupling position between the terminal main body 122 and the connector main body 132 in a horizontal direction.

The guide recess 139 has a first guide recess 139a which receives the first guide protrusion 129a and a second guide recess 139b which receives the second guide protrusion 129b.

In this exemplary embodiment, as shown in the figures, the guide protrusion 129 and the guide recess 139 are provided as two pairs respectively. However, they may be provided as one or more pairs. Also, although the guide protrusion 129 is provided to the terminal module 120 and the guide recess 139 is provided to the connector module 130 in this exemplary embodiment, the guide protrusion 129 may be provided to the connector module 130 and the guide recess 139 may be provided to the terminal module 120. In other exemplary embodiment, the guide protrusion 129 and the guide recess 139 may be eliminated.

In the resolver 100 of an electric driving motor for vehicle according to the exemplary embodiment of the present invention, the stator 110 comprises a connector coupling protrusion 117 which is formed to couple the stator main body 112 with the connector main body 132, and the connector module 130 comprises a connector coupling recess 137 which closely receives the connector coupling protrusion 117.

The connector coupling protrusion 117 and the connector coupling recess 137 are formed at the stator main body 112 and the connector main body 132 respectively to be fit with each other in the radial direction R. As the connector coupling protrusion 117 is closely received in the connector coupling recess 137, the connector module 130 is mounted to the stator 110. As the connector coupling protrusion 117 and the connector coupling recess 137 are coupled to each other as shown in Fig. 6, the coupling part 128 is received in the coupling recess part 136 and the connect end 138 is coupled to the connect pin 124b.

Accordingly, there is no need of additional coupling means because the connector module 130 is simply mounted to and detached from the stator 110, so that the manufacturing process and the repairing process are simplified and the cost is reduced.

Although, as shown in Fig. 3 to Fig. 6, the connector coupling protrusion 117 is provided to the stator 110 and the connector coupling recess 137 is provided to the connector module 130 in the exemplary embodiment of the present invention, the connector coupling protrusion 117 may be provided to the connector module 130 and the connector coupling recess 137 may be provided to the stator 110.

Also, the connector module 130 and the stator 110 may have connector guide parts (not shown) which are provided to the connector main body 132 and the stator main body 112 respectively to be fit therebetween in order to guide and fix the coupling position between the connector coupling protrusion 117 and the connector coupling recess 137.

In the resolver 100 of an electric driving motor for vehicle according to the exemplary embodiment of the present invention, the terminal module 120 and the connector module 130 are detachably mounted to the stator 110 respectively. Also, as the terminal module 120 and the connector module 130 are mounted to the stator 110 respectively, the terminal module 120 and the connector module 130 can be coupled to each other.

As another exemplary embodiment, the terminal module 120 may be detachably mounted to the stator 110 and the connector module 130 may be detachably mounted to the terminal module 120. Also, the connector module 130 may be detachably mounted to the stator 110 and the terminal module 120 may be detachably mounted to the connector module 130.

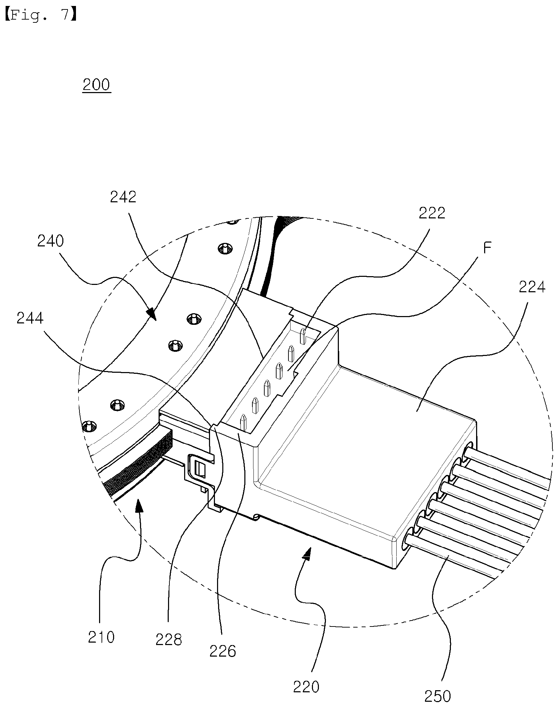

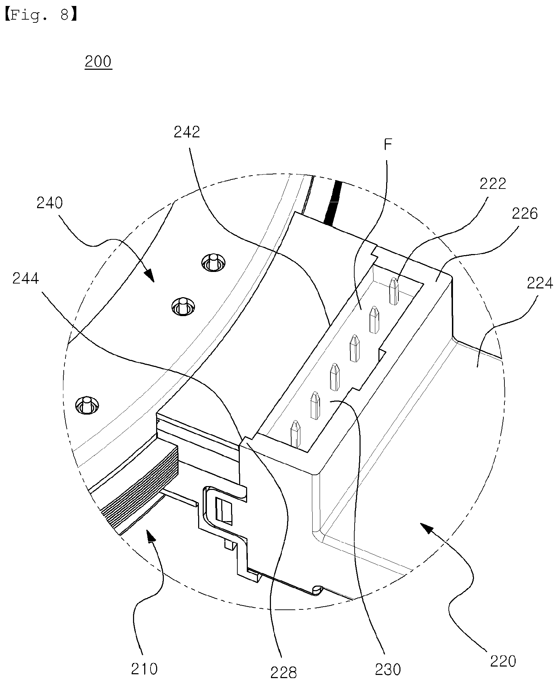

Fig. 7 is a perspective view of the resolver of an electric driving motor for vehicle according to the exemplary embodiment of the present invention before sealant is applied, Fig. 8 is a perspective view of the resolver of an electric driving motor for vehicle of Fig. 7 after the sealant is applied.

As shown in Fig. 7 and Fig. 8, the resolver 200 of an electric driving motor for vehicle according to the exemplary embodiment of the present invention comprises a rotor (not shown), a stator 210 encircling the rotor and comprising teeth (not shown) to be wound by a coil (not shown), a connector 220 comprising a terminal end 222 which is electrically connected to an outer device (not shown) and a connector main body 224 which supports the terminal end 222 to be exposed so that the terminal end 222 can contact the coil to be electrically connected therebetween, and a sealant 230 applied to the connector main body 224 to cover and protect the exposed terminal end 222.

The stator 210 includes a stator core (not shown), the teeth (not shown) and an insulating cover (not shown). The stator core has a shape of a ring and encircles the rotor (not shown) to be rotatable. The teeth protrude from the stator core to extend towards the rotor located therein. A coil (not shown) is wound around the teeth with the insulating cover therebetween. A slot is formed between teeth.

The connector 220 is coupled to a side of the stator 210 to electrically connect an outer device (not shown) such as a power supplying unit (not shown) with the coil (not shown). The connector 220 includes a connector main body 224, a terminal end 222, a sealant wall 226 and a fitting protrusion 228. A lead line 250 electrically connects the terminal end 222 with the outer device (not shown).

The connector main body 224 supports the terminal end 222 so that the terminal end 222 can be electrically connected to the lead line 250. The terminal end 222 is exposed from the connector main body 224 to be wound by an end of a coil (not shown) which is wound around the teeth. Accordingly, the coil (not shown) is electrically connected to the outer device (not shown) through the terminal end 222 and the lead line 250.

The sealant 230 is applied to the connector main body 224 to cover and protect the terminal end 222 which is exposed from the connector main body 224. Therefore, there is no need of additional protecting member to cover the terminal end 222 thus simplifying the structure and reducing the manufacturing cost. Also, when a problem such as the coil (not shown) is separated from the terminal end 222 is generated to the terminal end 222, there is no need of disassembling any other member but only the sealant 130 is need to be removed thus simply and easily resolving the problem, making the repairing process simplified and reducing cost for repairing.

It is preferable that the sealant 230 is made of a light permeable material. Accordingly, as shown in Fig. 8, even if the sealant 230 is applied to the connector main body 224, it is possible to check the state of the terminal end 222 directly without removing the sealant 230 from the connector main body 224. Therefore, when a problem is generated such as the coil is separated from the terminal end 222, it can be checked immediately and conveniently.

The sealant 230 may be made of a translucent material. Or, the sealant may be made of an impermeable material. In this case, it may be hard to check the state of the terminal end 222 directly. But, the repairing process can still be simplified because the state of the terminal end 222 can be checked by simply removing the sealant 230.

It is preferable that the sealant 230 is made of silicon. If the sealant 230 is made of silicon, the light permeability is enhanced. Also, its hardening is preferable in protecting the terminal end 222. The sealant 230 may be made of light hardening resin, thermosetting resin or other known hardening resin as well as the silicon. Or, the sealant 230 may be made of a fluid resin, that is not hardened, as long as it protects the terminal end 222.

The connector 220 comprises a sealant wall 226 which extends from the connector main body 224 and has a filling space F therein to surround the exposed terminal end 222 and to be filled by the sealant 230. The sealant 230 is filled in the filling space F.

The sealant wall 226 forms the filling space F having therein the terminal end 222 which protrudes to be exposed at an end side of the connector main body 224 in the axial direction. The sealant 230 is filled in the filling space F and covers the terminal end 122. Therefore, it is possible to prevent the material constituting the sealant 230 from flowing and contaminating a neighboring member when the sealant 230 is applied to the connector main body 224. Also, the terminal end 222 is stably covered and protected.

However the sealant wall 226 has a shape of a rectangle to form the filling space F, it may have a shape of a circle or other configuration.

Although the sealant wall 226 is provided in this exemplary embodiment, the sealant wall 226 may not be provided. In this case, the sealant 230 may be applied on a top of the connector main body 224 to a predetermined height by its viscosity as long as it can cover the exposed terminal end 222.

The terminal end 222 protrudes from the connector main body 224 to be exposed in the axial direction to a predetermined terminal height, the sealant wall 226 is extended from the connector main body 224 to be as high as or higher than the terminal. The sealant 230 is filled in the filling space F to have its thickness the same or more than the height of the terminal.

The terminal end 222 protrudes from the connector main body 224 to be exposed as high as the terminal for an end of the coil (not shown) to stably contact. Although the terminal end 222 protrudes in the axial direction, it may extend oblique to the axial direction or extend in other direction as long as it contacts the coil.

The sealant wall 226 is formed at the connector main body 224 to have the same height or higher than the terminal for the sealant 230 filled in the filling space F to cover an end part of the terminal end 222. Therefore, the terminal end 22 can be stably protected and the thickness of the sealant 230 can be maintained properly.

The resolver 200 of an electric driving motor for vehicle according to the exemplary embodiment of the present invention further comprises a coil protecting cover 240 which is coupled to the stator 210 to protect the coil (not shown) wound around the teeth (not shown). The connector 220 is coupled to the coil protecting cover 240 and the coil protecting cover 240 forms at least one side of the sealant wall 226 when the connector 220 is coupled to the coil protecting cover 240.

The coil protecting cover 240 is coupled to the stator 210 at axially both sides of the stator 210 to protect the coil (not shown) that is wound around the teeth (not shown). When the connector 220 is coupled to the stator 210, the connector 220 is also coupled to the coil protecting cover 240. One end side 242 of the coil protecting cover 240 forms a part of compartment surfaces of the filling space F to form the filling space F together with the sealant wall 226 of the connector 220.

As the filling space F is formed by using the one end side 242 of the coil protecting cover 240, the material for forming the filling space F can be saved as much thus simplifying the structure and reducing the cost. Also, as the sealant 230 becomes hardened, the coupling forces between the coil protecting cover 240 and the connector 220 and between the stator 210 and the connector 220 can be increased.

Although, in this exemplary embodiment of the present invention, the one end side 242 of the coil protecting cover 240 forms a part of the compartment surfaces of the filling space F, the sealant wall 226 may also be formed at the connector main body 224 as a closed curve so that the filling space F is compartmented only by the sealant wall 226.

The connector 220 has a fitting protrusion 228 to align a coupling position when the connector 220 is coupled to the coil protecting cover 240. The coil protecting cover 240 has a fitting recess 244 to fit with the fitting protrusion 228. The coupling position between the connector 220 and the coil protecting cover 240 is aligned and their coupling force is enhanced by the fitting between the fitting protrusion 228 and the fitting recess 244. Therefore, the filling space F can be stably formed and the application, covering and protection of the sealant 230 onto the terminal end 222 can be made stably.

Although the fitting protrusion 228 and the fitting recess 244 are provided in this exemplary embodiment of the present invention, they may be removed as long as the filling space F can be stably formed by the coupling between the connector 220 and the coil protecting cover 240. Also, the fitting protrusion 228 may be provided to the coil protecting cover 240 and the fitting recess 244 may be provided to the connector 220.

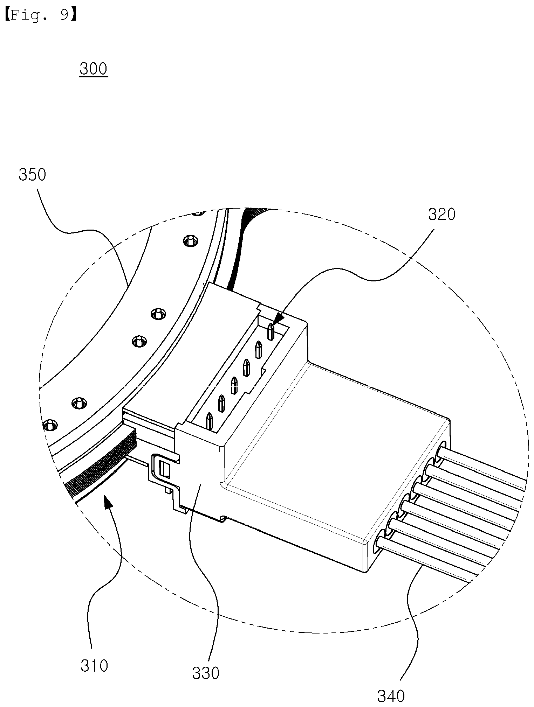

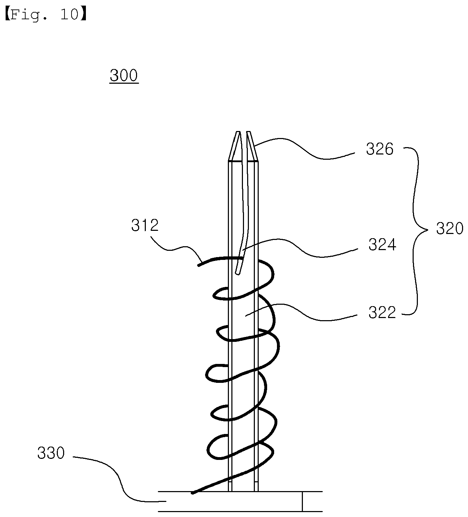

Fig. 9 is a perspective view of the resolver of an electric driving motor for vehicle according to the exemplary embodiment of the present invention as described above. Fig. 10 is a schematic view of the terminal end in Fig. 9.

As shown in Fig. 9 and Fig. 10, the resolver 300 for an electric driving motor for vehicle according to the exemplary embodiment of the present invention comprises a rotor (not shown), a stator 310 encircling the rotor and comprising teeth (not shown) to be wound by a coil 312, a terminal end 320 comprising a terminal end main body 322 which is electrically connected to an outer device (not shown) and a coil holder 324 which is formed at the terminal end main body 322 to hold the coil 312 and prevent it from separating from the terminal end main body 322 so that the terminal end 320 can be electrically connected to the coil 312.

The stator 310 includes a stator core (not shown), the teeth (not shown), an insulating cover (not shown).

The stator core (not shown) has a shape of a ring and encircles the rotor (not shown) to be rotatable. The teeth (not shown) protrude from the stator core to extend towards the rotor (not shown) located therein. The coil 312 is wound around the teeth with the insulating cover (not shown) therebetween. A slot is formed between the teeth.

A terminal end supporting part 330 is coupled to the stator 310 to support the terminal end 320. A coil protecting cover 350 is coupled to the stator 310 at axially both sides of the stator 310 to protect the coil 312 that is wound around the teeth (not shown).

The terminal end 320 has the terminal end main body 322 and the coil holder 324 and it is supported by the terminal end supporting part 330. The terminal end main body 322 protrudes from the terminal end supporting part 330 to a predetermined length to contact an end part of the coil 312 wound around the teeth (not shown). Although the terminal end main body 322 protrudes in the axial direction, it may also protrude oblique to the axial direction or in another direction as long as it can contact the coil 312.

The terminal end main body 322 is electrically connected to the outer device (not shown) such as a power supplying unit (not shown) through a lead line 340. As the coil 312 contacts the terminal end main body 322, the coil 312 is electrically connected to the outer device through the terminal end 320 and the lead line 340.

The coil holder 324 is formed at the terminal end main body 322 to hold the coil 312 and prevent it from being separated from the terminal end main body 322. The coil holder 323 is formed by cutting the terminal end main body 322 to have a holder slit that is inserted by the coil 312. The coil holder 324 is cut from a tip end 326 of the terminal end main body 322 and it is cut in a longitudinal direction of the terminal end main body 322.

Therefore, the coil 312 is held stably by the coil holder 324 so that a stable contact between the coil 312 and the terminal end main body 322 can be maintained. It is possible to prevent the coil 312 from being separated from the terminal end main body 322 even if vibration occurs due to a high speed rotation of the rotor (not shown).

Also, as the coil holder 324 is cut from the tip end 326 of the terminal end main body 322 in the longitudinal direction, that is the axial direction, the coil 312 can be coupled to the terminal end 320 simply and conveniently by moving the coil 312 from the tip end 326 in the axial direction along the holder slit when the coil 312 is coupled to the terminal end 320. Therefore, there is no need of an additional coupling process thus saving manufacturing process and cost.

Although the coil holder 324 is formed by cutting the terminal end main body 322 from the tip end 326 in this exemplary embodiment of the present invention, the coil holder 324 may also be formed by cutting from an outer surface of a middle part of the terminal end main body 322 or by cutting from an outer surface of a part thereof near to the terminal end supporting part 330 as long as it can hold the coil 312.

Also, although the coil holder 324 is cut in the longitudinal direction of the terminal end main body 322, it may also be cut obliquely to the longitudinal direction or cut in a radial direction or cut perpendicular to the longitudinal direction or cut in another direction.

It is preferable that the coil holder 324 is cut so that a width of the holder slit is smaller than a diameter of the coil 312. Therefore, the coupling force between the coil 312 and the terminal end main body 322 can be increased by friction force therebetween. However, the width of the holder slit of the coil holder 324 may also be the same of larger than the diameter of the coil 312. In this case, the coil 312 can be stably wound around the coil holder 324 by elastic force from a bending of the coil 312 wound around the terminal end main body 322.

The coil 312 is inserted into the coil holder 324 and wound around the terminal end main body 322 to several turns towards the terminal end supporting part 330. That is, the coil 312 is inserted into the coil holder 324 and then wound around the terminal end main body 322 to advance downward. Accordingly, contact area between the coil 312 and the terminal end main body 322 is increased thus also increasing the coupling force between the coil 312 and the terminal end 320.

The coil 312 may also be wound around the terminal end main body 322 towards the tip end 326 of the terminal end main body 322 after it is inserted into the coil holder 324. Or it may be wound around the terminal end main body 322 at the same location where it is inserted into the coil holder 324. Or, the coil 312 may not wound around the terminal end main body 322 after it is inserted into the coil holder 324.

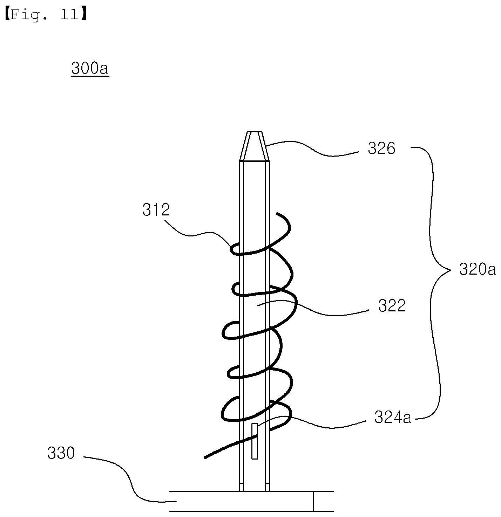

Fig. 11 is a schematic view of a modification of the terminal end in Fig. 10.

As shown in Fig. 11, the coil holder 324a is formed to penetrate the terminal end main body 322 so that the coil 312 can be held through the terminal end main body 322.

As the coil holder 324a is formed to penetrate the terminal end main body 322, the coil 312 is wound around the terminal end main body 322 to maintain a stable contact with the terminal end 320 after it penetrates the coil holder 324a.

The coil holder 324a is formed at the terminal end main body 322 at a part near to the terminal end supporting part 330. It may also be formed at a middle part of the terminal end main body 322 or at the tip end 326.

After the coil 312 is inserted into the coil holder 324a, it is wound around the terminal end main body 322 to several turns towards the tip end 326 of the terminal end main body 322. That is, the coil 312 is wound around the terminal end main body 322 to advance upward after it is inserted into the coil holder 324. Therefore, the contact surface between the coil 312 and the terminal end main body 322 is increased thus also increasing the coupling force between the coil 312 and the terminal end 320.

After the coil 312 is inserted into the coil holder 324, it may also be wound around the terminal end main body 322 towards the terminal end supporting part 330 or wound at the same location where it is inserted into the coil holder 324. Or, the coil 312 may not wound around the terminal end main body 322 after it is inserted into the coil holder 324.

It is preferable that the coil holder 324a is formed so that a width of the penetrating hole is smaller than the diameter of the coil 312. Therefore, the coupling force between the coil 312 and the terminal end main body 322 can be increased by friction force therebetween. However, the width of the penetrating hole of the coil holder 324 may also be the same of larger than the diameter of the coil 312. In this case, the coil 312 can be stably wound around the coil holder 324 by elastic force from a bending of the coil 312 wound around the terminal end main body 322.

The above described exemplary embodiment is only to help understand the present invention and is not to be understood as limiting a scope of patent right or a scope of technology of the present invention.

The scope of patent right or the scope of technology of the present invention is defined by the appended claims and their equivalents.

## Claims

1. A resolver (200) for an electric driving motor for vehicle comprising:
a rotor;
a stator (210) comprising a stator main body which encircles the rotor, teeth which extend from the stator main boby, and a coil wound around the teeth;
a terminal module comprising a terminal end (222) which contacts the coil for an electric connection and a terminal main body which supports the terminal end (222);
and
a connector module (220) comprising a connector main body (224) which is detachably coupled to the terminal main body and a lead line (250) which is connected to an outer device and supported by the connector main body (224) and which contacts the terminal end (222) for an electric connection if the connector main body (224) is coupled to the terminal main body,
**characterized in that** the connector main body (224) supports the terminal end (222) to be exposed, and the resolver (200) further comprises a sealant (230) applied to the connector main body (224) to cover and protect the exposed terminal end (222).

2. The resolver (200) for an electric driving motor for vehicle according to claim 1, wherein the connector (220) comprises a sealant wall (226) which extends from the connector main body (224) and has a filling space (F) therein to surround the exposed terminal end (222) and to be filled by the sealant (230), and
the sealant (230) is filled in the filling space (F).

3. The resolver (200) for an electric driving motor for vehicle according to claim 2, wherein the resolver (200) further comprises a coil protecting cover (240) which is coupled to the stator (210) to protect the coil, the connector (220) is coupled to the coil protecting cover (240), and the coil protecting cover (240) forms at least one side of the sealant wall (226) when the connector (220) is coupled to the coil protecting cover (240).

4. The resolver (200) for an electric driving motor for vehicle according to claim 3, wherein one of the coil protecting cover (240) and the connector (220) comprises a fitting protrusion (228) to align a coupling position when the connector (220) is coupled to the coil protecting cover (240), and
the other one of the coil protecting cover (240) and the connector (220) comprises a fitting recess (244) to fit with the fitting protrusion (228).

5. The resolver (200) for an electric driving motor for vehicle according to claim 2, wherein the terminal end (222) extends to be exposed from the connector main body (224) in an axial direction to a predetermined terminal height, the sealant wall (226) extends from the connector main body (224) to be higher than the terminal height, and the sealant (230) is filled in the filling space (F) with a thickness greater than the terminal height.

6. The resolver (200) for an electric driving motor for vehicle according to claim 1, wherein the sealant (230) is made of a light permeable material.

7. The resolver (200) for an electric driving motor for vehicle according to claim 1, wherein the sealant (230) is made of silicon.

## Patentansprüche

1. Drehgeber (200) für einen elektrischen Fahrmotor für ein Fahrzeug, der Folgendes umfasst:
einen Rotor;
einen Stator (210), der einen Statorhauptkörper, der den Rotor einschließt, Zähne, die vom Statorhauptkörper verlaufen, und eine Spule, die um die Zähne gewickelt ist umfasst;
ein Anschlussmodul, das ein Anschlussende (222), das mit der Spule für eine elektrische Verbindung in Kontakt ist, und einen Anschlusshauptkörper, der das Anschlussende (222) trägt, umfasst; und
ein Verbindermodul (220), das einen Verbinderhauptkörper (224), der trennbar an den Anschlusshauptkörper gekoppelt ist, und eine Anschlussleitung (250), die mit einer Außeneinrichtung verbunden ist und durch den Verbinderhauptkörper (224) getragen wird, und die mit dem Anschlussende (222) für eine elektrische Verbindung in Kontakt ist, wenn der Verbinderhauptkörper (224) an den Anschlusshauptkörper gekoppelt ist, umfasst,
**dadurch gekennzeichnet, dass** der Verbinderhauptkörper (224) das Anschlussende (222) derart trägt, dass es freiliegt, und der Drehgeber (200) ferner ein Dichtungsmittel (230) enthält, das am Verbinderhauptkörper (224) angebracht ist, um das freiliegende Anschlussende (222) abzudecken und zu schützen.

2. Drehgeber (200) für einen elektrischen Fahrmotor für ein Fahrzeug nach Anspruch 1, wobei der Verbinder (220) eine Dichtungsmittelwand (226) enthält, die vom Verbinderhauptkörper (224) verläuft und einen Füllraum (F) enthält, um das freiliegende Anschlussende (222) zu umgeben und durch das Dichtungsmittel (230) gefüllt zu sein, und
das Dichtungsmittel (230) in den Füllraum (F) gefüllt ist.

3. Drehgeber (200) für einen elektrischen Fahrmotor für ein Fahrzeug nach Anspruch 2, wobei der Drehgeber (200) ferner eine die Spule schützende Abdeckung (240) umfasst, die an den Stator (210) gekoppelt ist, um die Spule zu schützen, der Verbinder (220) an die die Spule schützende Abdeckung (240) gekoppelt ist und die die Spule schützende Abdeckung (240) mindestens eine Seite der Dichtungsmittelwand (226) bildet, wenn der Verbinder (220) an die die Spule schützende Abdeckung (240) gekoppelt ist.

4. Drehgeber (200) für einen elektrischen Fahrmotor für ein Fahrzeug nach Anspruch 3, wobei die die Spule schützende Abdeckung (240) oder der Verbinder (220) einen Passungsvorsprung (228) umfasst, um eine Kopplungsposition auszurichten, wenn der Verbinder (220) an die die Spule schützende Abdeckung (240) gekoppelt ist, und
das andere Element der die Spule schützenden Abdeckung (240) und des Verbinders (220) eine Passungsaussparung (244) enthält, um mit dem Passungsvorsprung (228) zusammenzupassen.

5. Drehgeber (200) für einen elektrischen Fahrmotor für ein Fahrzeug nach Anspruch 2, wobei das Anschlussende (222) derart verläuft, dass es vom Verbinderhauptkörper (224) in einer axialen Richtung zu einer vorgegebenen Anschlusshöhe freiliegt, die Dichtungsmittelwand (226) vom Verbinderhauptkörper (224) verläuft, derart dass sie höher als die Anschlusshöhe ist, und das Dichtungsmittel (230) mit einer Dicke, die größer als die Anschlusshöhe ist, in den Füllraum (F) gefüllt ist.

6. Drehgeber (200) für einen elektrischen Fahrmotor für ein Fahrzeug nach Anspruch 1, wobei das Dichtungsmittel (230) aus einem lichtdurchlässigen Material hergestellt ist.

7. Drehgeber (200) für einen elektrischen Fahrmotor für ein Fahrzeug nach Anspruch 1, wobei das Dichtungsmittel (230) aus Silikon hergestellt ist.

## Revendications

1. Résolveur (200) pour un moteur d'entraînement électrique pour véhicule, comprenant :
un rotor ;
un stator (210) comprenant un corps principal de stator qui entoure le rotor, des dents qui s'étendent depuis le corps principal de stator, et un bobinage enroulé autour des dents ;
un module de terminal comprenant une extrémité de terminal (222) qui est en contact avec le bobinage pour une connexion électrique, et un corps principal de terminal qui supporte l'extrémité de terminal (222) ; et
un module connecteur (220) comprenant un corps principal de connecteur (224) qui est couplé de façon détachable au corps principal de terminal, et une ligne de liaison (250) qui est connectée à un dispositif extérieur et
supportée par le corps principal de connecteur (224), et qui est en contact avec l'extrémité de terminal (222) pour une connexion électrique si le corps principal de connecteur (224) est couplé au corps principal de terminal,
**caractérisé en ce que** le corps principal de connecteur (224) supporte l'extrémité de terminal (222) pour qu'elle soit exposée, et le résolveur (200) comprend en outre un produit de scellement (230) appliqué sur le corps principal de connecteur (224) pour couvrir et protéger l'extrémité de terminal exposée (222).

2. Résolveur (200) pour un moteur d'entraînement électrique pour véhicule, selon la revendication 1, dans lequel le connecteur (220) comprend une paroi pour produit de scellement (226) qui s'étend depuis le corps principal de connecteur (224) et qui comporte à l'intérieur un espace de remplissage (F) pour entourer l'extrémité de terminal exposée (222) et pour être rempli par le produit de scellement (230), et
le produit de scellement (130) est rempli dans l'espace de remplissage (F).

3. Résolveur (200) pour un moteur d'entraînement électrique pour véhicule, selon la revendication 2, dans lequel le résolveur (200) comprend une couverture de protection de bobinage (240) qui est couplée au stator (210) afin de protéger le bobinage, le connecteur (220) est couplé à la couverture de protection de bobinage (240), et la couverture de protection de bobinage (240) forme au moins un côté de la paroi pour produit de scellement (226) quand le connecteur (220) est couplé à la couverture de protection de bobinage (240).

4. Résolveur (200) pour un moteur d'entraînement électrique pour véhicule, selon la revendication 3, dans lequel un élément parmi la couverture de protection de bobinage (240) et le connecteur (220) comprend une projection d'engagement (228) pour aligner une position de couplage quand le connecteur (220) est couplé à la couverture de protection de bobinage (240), et
l'autre élément parmi la couverture de protection de bobinage (240) et le connecteur (220) comprend un évidement d'engagement (244) pour s'engager avec la projection d'engagement (228).

5. Résolveur (200) pour un moteur d'entraînement électrique pour véhicule, selon la revendication 2, dans lequel l'extrémité de terminal (222) s'étend de manière à être exposée depuis le corps principal de connecteur (224) dans une direction axiale à une hauteur de terminal prédéterminée, la paroi pour produit de scellement (226) s'étend depuis le corps principal de connecteur (224) pour être plus haute que la hauteur de terminal, et le produit de scellement (230) est rempli dans l'espace de remplissage (F) avec une épaisseur plus élevée que la hauteur de terminal.

6. Résolveur (200) pour un moteur d'entraînement électrique pour véhicule, selon la revendication 1, dans lequel le produit de scellement (230) est réalisé d'un matériau perméable à la lumière.

7. Résolveur (200) pour un moteur d'entraînement électrique pour véhicule, selon la revendication 1, dans lequel le produit de scellement (230) est fait de silicone.
